# FASCICULE DE BREVET EUROPEEN

(11) **EP 1 511 372 B1**
(45) Date de publication et mention de la délivrance du brevet: **04.08.2010**
(21) Numéro de dépôt: 02745501.3
(22) Date de dépôt: 07.06.2002
(51) Int. Cl.: A01D 34/416

(54) **NOUVEL ENSEMBLE DE COUPE ET NOUVEAU FILAMENT DE COUPE POUR UN APPAREIL DE COUPE DE VEGETAUX**
MÄHFADEN FÜR VEGETATION-MÄHAPPARAT
NOVEL CUTTING UNIT AND NOVEL CUTTING FILAMENT FOR A PLANT-CUTTING DEVICE

(43) Date de publication de la demande: 09.03.2005
(73) Titulaire: Speed France S.A.S., 69400 Arnas (FR)
(72) Inventeur: LEGRAND, Emmanuel, F-01240 Saint Germain sur Renon (FR)
(74) Mandataire: Le Forestier, Eric
(86) Numéro de dépôt international: PCT/FR2002/001959
(87) Numéro de publication internationale: WO 2003/103372

(56) Documents cités:
- EP-A- 1 057 396
- US-A- 4 905 465
- US-A- 5 048 278
- US-A- 5 761 816
- US-A1- 2002 023 356
- US-B1- 6 240 643

## Description

La présente invention concerne d'une façon générale les appareils de coupe de végétaux, notamment débrousailleuses, et plus particulièrement un nouvel agencement de tête de coupe pour un tel appareil.

Depuis de nombreuses années, on a développé différentes formes de fils ou filaments de coupe destinés à être montés dans une tête de coupe, entraînée par un moteur électrique ou thermique, de manière à ce que la rotation rapide de la tête entraîne le ou les filaments, qui tendent à adopter une étendue rectiligne sous l'effet de la force centrifuge. Ces filaments sont en général réalisés par extrusion de polyamide.

Alors que les filaments les plus anciens présentaient une section circulaire et étaient lisses sur toute leur étendue, on a maintenant développé des filaments présentant des sections variées, censées améliorer la qualité de coupe (présence d'arêtes, etc.) et/ou la longévité du filament, et/ou censés diminuer le bruit de l'appareil en fonctionnement en jouant sur les turbulences.

On trouve ainsi des filaments comportant des arêtes, des rainures, des gorges, ou encore des déformations locales du filament le long de son étendue.

Toutefois, un inconvénient commun à tous les filaments connus est que l'orientation du filament au niveau de sa longueur de travail est en général mal contrôlée, si bien que, lorsqu'un filament est censé attaquer les végétaux par exemple au niveau d'une arête de coupe, il n'est nullement garanti que c'est bien une telle arête qui effectuera l'attaque.

Un exemple représentatif de ce problème se trouve dans les filaments à section approximativement carrée, où les végétaux risquent d'être attaqués, au moins localement, non pas par une arête du filament, mais par l'une ses faces planes joignant deux arêtes consécutives.

Et même si des tentatives ont été effectuées pour développer des filaments dont l'efficacité de coupe soit améliorée par rapport à celle obtenue avec une section circulaire, mais indépendante de l'orientation réelle du filament, on observe que ce gain d'efficacité reste extrêmement limité.

On connaît certes par le document WO-A-99/40773 des ensembles de coupe comprenant un filament de coupe, notamment à profil en aile d'avion, qui opère dans une orientation prédéterminée. Toutefois, un tel filament de coupe nécessite un processus de fabrication spécial, selon lequel le filament doit faire l'objet, en des emplacements bien déterminés, d'une torsion à environ 90° pour assurer que le profil en aile d'avion travaille bien selon l'orientation voulue.

Une telle approche est toutefois incompatible avec les techniques actuelles de fabrication en grande série par extrusion, où l'on fabrique des longueurs très importantes de filament, coupées ensuite en rouleaux ou brins de la longueur voulue, mais ou toute intervention de fabrication sur les brins les uns après les autres compromet gravement le coûte de revient.

Un autre profil en aile d'avion est enseigné par le document US-A-5 761 816, dans lequel l'orientation du filament est assurée en conformant selon le même profil l'ouverture prévue dans la tête de coupe pour le passage du filament.

On connaît également par le document US-A-5 048 278 un filament de coupe de section triangulaire qui est maintenu dans une orientation prédéterminée au niveau de son attache à la tête de coupe. L'ensemble de coupe de ce document présente toutefois deux inconvénients majeurs. En premier lieu, le montage du filament dans la tête de coupe pour maintenir l'orientation du filament implique des moyens mécaniques et une manipulation extrêmement complexes. En deuxième lieu, l'orientation du filament à section triangulaire telle qu'elle est décrite dans ce document n'est pas à même d'assurer une coupe optimale.

Enfin le document US-A-4 118 865 décrit une autre tête de coupe à filament triangulaire, qui nécessite toutefois une disposition spéciale, à savoir une rondelle sertie à la racine du filament, pour son attache sur la tête de coupe, ce qui complique la fabrication et la rend plus coûteuse. En outre, l'orientation de la section du filament par rapport à cette rondelle d'attache n'est pas précisément définie, s'agissant apparemment d'un sertissage manuel.

La présente invention vise à pallier ces limitations de l'état de la technique, et à proposer un appareil de coupe dans lequel, tout en utilisant un filament de coupe réalisé uniformément sur une très grande longueur, notamment par extrusion, on puisse faire en sorte qu'un filament de coupe doté d'une arête de coupe travaille dans une orientation spécifique pour laquelle cette arête de coupe présente son efficacité optimale.

Elle propose à cet effet, selon un premier aspect, un ensemble de coupe pour un appareil de coupe de végétaux tel qu'un coupe-bordure, une débrousailleuse, etc., selon la revendication 1.

Certains aspects préférés, mais non limitatifs, de cet ensemble de coupe sont les suivants :
- la zone de travail du filament comprend un matériau différent de celui d'un corps principal du filament.
- les moyens de retenue de la tête de coupe comprennent un moyen de serrage du filament opérant au voisinage de l'ouverture.
- le filament est retenu sur la tête de coupe de telle sorte que lesdites faces du filament présentent une orientation générale comprise entre environ 35° et 55° par rapport à l'horizontale et la verticale.

- la région d'attache du filament est une région fléchie à environ 180° et réunissant deux brins de travail du filament à l'intérieur de la tête de coupe.
- le plan de flexion privilégiée du filament est obtenu par un rétrécissement de la section du filament suivant une direction prédéterminée, réalisé en formant des dents au niveau de la zone de travail localisée du filament.
- le matériau de la zone de travail localisée est constitué par un revêtement appliqué sur le corps principal.
- le matériau de la zone de travail localisée est massif, et le corps principal et le matériau massif de la zone de travail sont réalisés par co-extrusion.
- le filament comprend deux zones de travail disposées de part et d'autre du corps principal.
- le matériau de la ou des zones de travail se prolonge au-delà de celle(s)-ci pour entourer entièrement le corps principal.
- le corps principal présente une section généralement circulaire.
- la ou chaque zone de travail est encastrée dans le corps principal.
- le corps principal est constitué par deux parties situées de part et d'autre d'une membrure en un matériau différent.
- la membrure s'étend généralement verticalement.
- la membrure est réalisée dans le même matériau que la ou les zones de travail.

La présente invention propose enfin un appareil de coupe de végétaux tel qu'un coupe-bordure, une débroussailleuse, etc., **caractérisé en ce qu**'il comprend un ensemble de coupe tel que défini ci-dessus, et un moteur pour entraîner en rotation ledit ensemble de coupe.

D'autres aspects, buts et avantages de la présente invention apparaîtront mieux à la lecture de la description détaillée suivante de formes de réalisation préférées de celle-ci, donnée à titre d'exemple non limitatif et faite en référence aux dessins annexés, sur lesquels :
La figure 1 est une vue de dessous schématique d'une tête de coupe de débrousailleuse, pourvue de plusieurs filaments de coupe,
La figure 2 est une vue de dessus des première et deuxième parties principales d'un premier exemple de tête de coupe,
La figure 3 est une vue en élévation de côté de l'une des parties de la tête de coupe de la figure 2,
La figure 4 est une vue en section d'un filament de coupe avantageusement utilisé avec la tête de coupe des figures 2 et 3,
La figure 5 illustre en coupe et en détail la coopération du filament de coupe de la figure 3 avec la tête de coupe des figures 2 et 4,
La figure 6 est une vue en élévation de côté d'une tête de coupe selon l'invention,
La figure 7 est une vue de dessous partielle d'une tête de coupe selon un autre exemple, La figure 8 est une vue en élévation partielle de la tête de coupe de la figure 7,
La figure 9 illustre en section un exemple de filament de coupe utilisable avec la tête de coupe des figures 7 et 8,
La figure 10 est une vue en perspective d'un autre exemple de filament de coupe utilisable avec la tête de coupe des figures 7 et 8,
La figure 11 est une vue de dessus du filament de coupe de la figure 10,
Les figures 12 et 13 sont des vues en section selon les lignes XII-XII et XIII-XIII, respectivement, de la figure 11,
La figure 14 est une vue en perspective d'un autre exemple encore d'un filament de coupe,
La figure 15 est une vue en perspective d'un autre exemple encore de filament de coupe selon l'invention,
La figure 16 est une section illustrant une variante de réalisation des filaments de coupe des figures 14 et 15,
La figure 17 est une section d'un autre exemple encore de filament d'un coupe,
La figure 18 est une section d'un autre exemple encore de filament d'un coupe, et
Les figures 19 à 22 illustrent, à la fois en perspective et en coupe, d'autres exemples de filaments de coupe. Les élément (décrits dans les figures 2, 3, 5, 7, 14, 16, 17, 18, 19, 20, 21, 22) qui concernent des formes de réalisation autres que des filaments ou orifices de section carrée ne sont pas couverts pas les revendications mais sont utiles à la compréhension de l'invention.

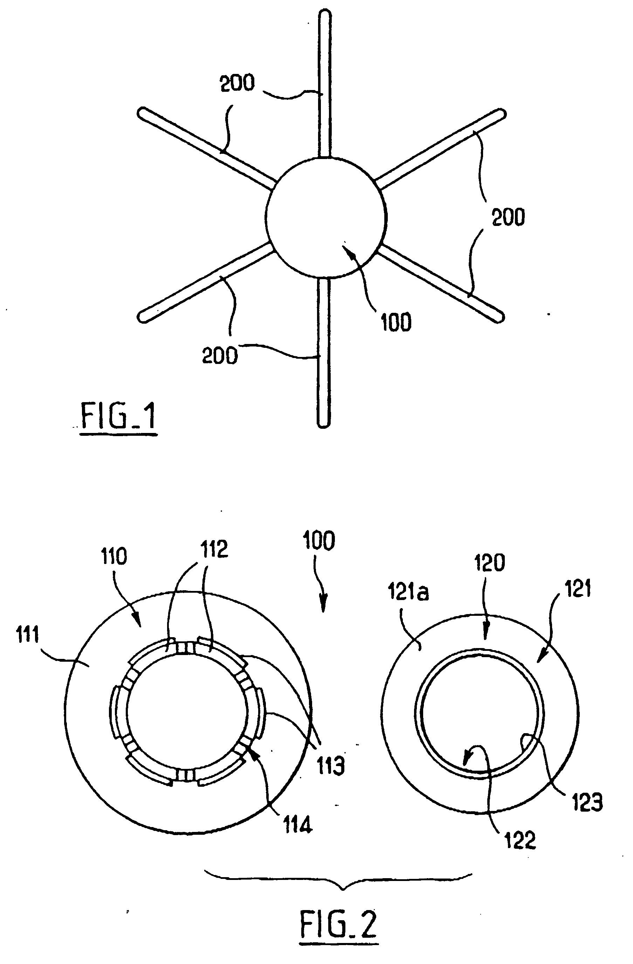

En référence tout d'abord à la figure 1, on a représenté schématiquement un ensemble de coupe d'une débrousailleuse comprenant une tête de coupe 100 et un ou plusieurs filaments de coupe 200 (en l'espèce six) s'étendant à intervalles angulaires réguliers (60°) autour de la tête.

De façon classique en soi, la tête de coupe est entraînée en rotation par un moteur thermique ou électrique (non représenté), à une vitesse comprise, de façon typique mais nullement limitative, entre environ 1000 et 4000 tours/minute.

De même les autres équipements de la débrousailleuse, qui peuvent être classiques, ne seront pas décrits.

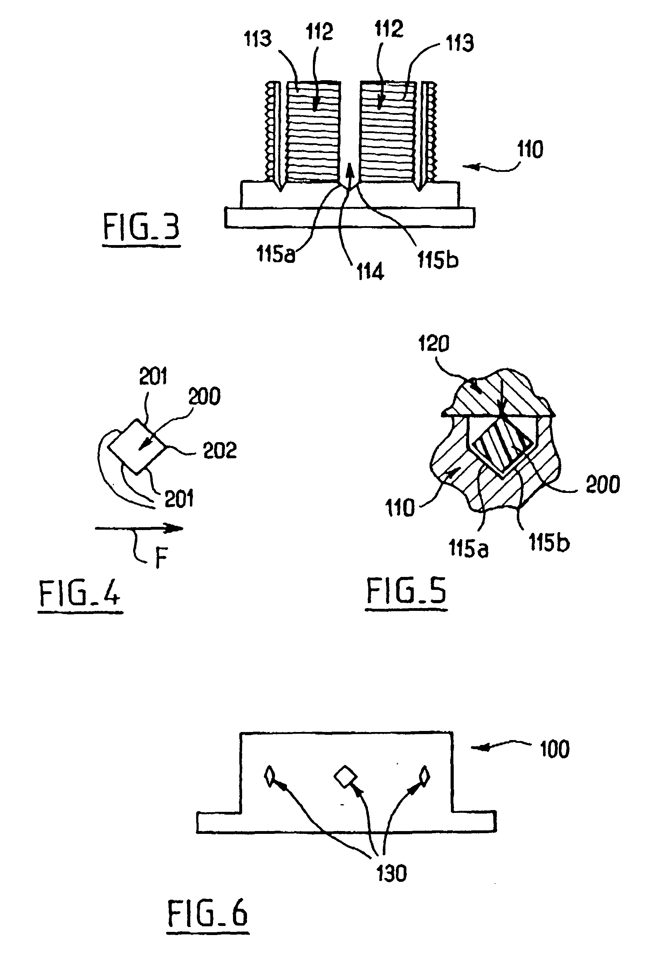

Les figures 2 et 3 illustrent une tête de coupe 100 en deux parties, comprenant une première partie 110 de réception de filaments de coupe et une seconde partie 120 de serrage et de blocage.

La partie 110 comprend, à partir d'une base généralement circulaire 111, un fût généralement cylindrique, comprenant en l'espèce six branches 112 séparées par six fentes 114 s'étendant parallèlement à l'axe du fut.

Le fût est extérieurement fileté en 113 de manière à recevoir par vissage la partie 120 de la tête, qui comprend pour l'essentiel un corps cylindrique 121 définissant un épaulement 121a et comportant une ouverture centrale traversante 122 présentant intérieurement un filetage 123 capable de coopérer avec filetage extérieur 113 de la partie 110.

Comme on l'observe en particulier sur la figure 3, le fond de chaque fente 114 présente la forme d'un V symétrique, avec deux faces 115a, 115b inclinées à environ 90° l'une par rapport à l'autre.

La figure 4 illustre la section d'un filament de coupe 200, cette section étant en l'espèce carrée de sorte que le filament possède des bords droits 201 et quatre arêtes. Lorsque le filament possède, par rapport à une direction de coupe horizontale F illustrée sur la figure 4, l'orientation représentée sur cette même figure, il présente à gauche une arête de coupe 202 permettant d'attaquer les végétaux à couper avec une bonne efficacité de coupe. Bien entendu, si la tête de coupe tourne dans le sens inverse, c'est par l'arête opposée que les végétaux à couper seront attaqués.

Un tel filament est destiné à être coupé à longueur et replié sensiblement selon une forme en « U » pour que les deux branches libres du U passent à travers deux fentes 114 de la partie 110 de la tête, et que le fond du U s'étende à l'intérieur des branches filetées 112 de la tête. Dans le présent exemple, on forme donc trois filaments en U qui formeront en tout six brins de coupe.

Lors de ce montage, le fond en « V » 115a, 115b de chaque fente 114 est destiné à recevoir intimement la partie du filament de coupe 200 située au droit de cette fente. Lorsque la partie 120 de la tête est vissée sur la partie 110, jusqu'à ce que son épaulement 121a s'appuie sur l'arête de sommet de chaque filament, pour ainsi maintenir fermement celui-ci dans la position recherchée, comme illustré sur la figure 5 qui représente le détail du blocage d'un filament.

On assure ainsi que le filament de coupe 200 va bien occuper la position de coupe illustrée sur la figure 4, avec des côté inclinés sensiblement à 45° par rapport à l'horizontale et à la verticale.

Dans la mesure où le filament de coupe est suffisamment rigide sur toute sa longueur de travail, on aboutit donc à ce que ce soit bien une arête de coupe latérale 202 du filament qui se situe au niveau du bord d'attaque dudit filament.

La figure 6 représente une autre forme de réalisation d'une tête de coupe, ou celle-ci présente la forme d'un corps cylindrique creux dans lequel sont pratiquées une série d'orifices 130 de forme carrée, d'une taille légèrement supérieure à la section du filament de coupe, l'orientation de ces orifices étant telle qu'illustrée, avec des côtés à 45° par rapport à l'horizontale et la verticale. Le ou chaque filament de coupe, sous forme de brin simple ou de brin double en U, est bloqué à l'intérieur de la tête 100 par des moyens de serrage non représentés, typiquement à vis, de façon connue en soi. Naturellement, la forme et les dimensions des orifices 130 sont déterminées en fonction de la forme et des dimensions de la section transversale du filament de coupe, qui peut être très diverse comme on le verra plus loin.

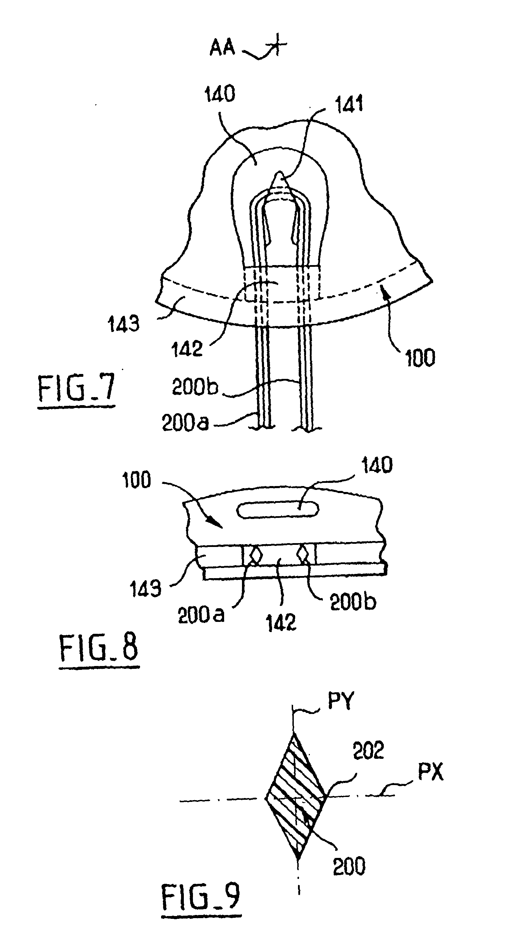

Les figures 7 et 8 représentent une autre forme de réalisation d'une tête de coupe, dans laquelle des filaments en « U » sont également montés.

Ainsi l'on observe une tête de coupe généralement circulaire 100, représentée partiellement, comportant une série de cavités 140 abritant chacune un crochet 141 dirigé vers l'axe de rotation AA de la tête et occupant seulement une partie de la cavité respective 140, de telle sorte que la partie coudée à environ 180° du filament en U puisse être introduite dans la cavité, après que les deux brins de coupe 200a, 200b aient été insérées, par l'intérieur, dans une ouverture traversante 142 s'étendant entre la cavité 140 et l'extérieur de la tête, en débouchant dans une gorge périphérique 143. En tirant sur les deux brins de coupe 200a, 200b, la partie coudée du filament vient se caler derrière le crochet 141, pour retenir le filament dans cette position.

Avec un tel montage en U, le passage 142, de forme générale rectangulaire et commun au deux brins, comme illustré sur la figure 8, n'est pas apte en lui-même à imposer aux brins du filament de coupe de prendre une orientation déterminée.

Toutefois, si l'on utilise avec une telle tête de coupe une filament tel qu'il présente une direction de flexion privilégiée, le coude à 180° décrit par le filament là où il réunit les deux brins de travail permet, par cette flexion privilégiée, de donner aux brins une orientation privilégiée.

Par exemple, si l'on considère un filament de coupe 200 dont la section en losange est illustrée sur la figure 9, on comprend que, compte tenu du fait que sa largeur est sensiblement inférieure à sa hauteur, sa flexion privilégiée va s'effectuer dans un plan PX passant par ses deux arêtes latérales.

De la sorte, le montage d'un tel filament dans une tête de coupe recevant des filaments en « U » va occasionner une orientation des brins de travail telle qu'illustrée sur la figure 8, dans laquelle les végétaux sont attaqués au niveau d'une arête 202 (même si en l'espèce ce n'est pas l'arête la plus vive) et non pas au niveau d'une face plane du filament de coupe.

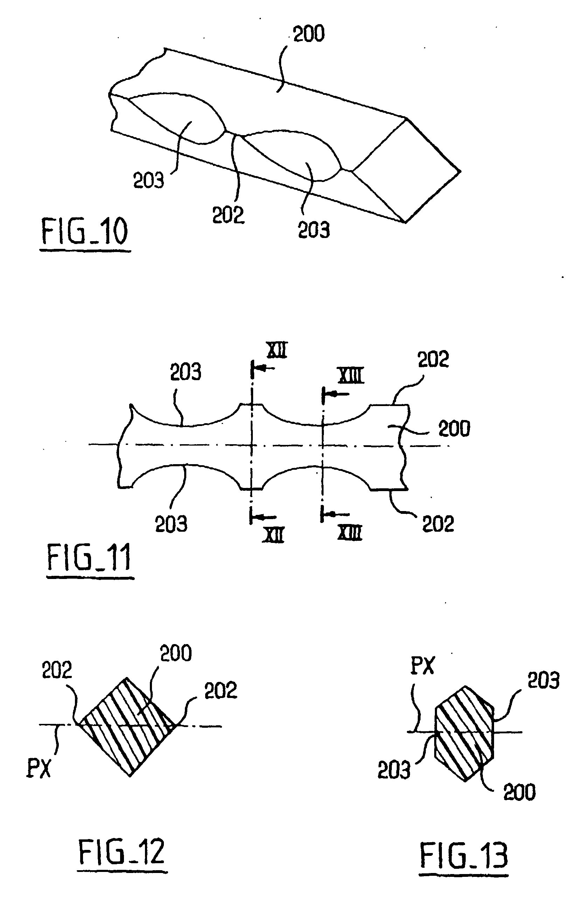

Les figures 10 à 13 illustre un autre exemple de filament de coupe 200 à flexion privilégiée, capable de se comporter lors d'un montage en « U » comme décrit ci-dessus.

Ce filament présente une section de départ carrée, et des encoches généralement courbes 203 ont été ménagées de façon régulière au niveau de ses deux arêtes latérales, tandis que ses arêtes supérieure et inférieure sont laissées intactes.

Les sections transversales du filament, respectivement au niveau d'un intervalle entre deux encoches et au niveau le plus profond des encoches, sont illustrées sur les figures 12 et 13 respectivement. On comprend que, du fait qu'un tel filament présente en moyenne une largeur sensiblement inférieure à sa hauteur, sa flexion privilégiée va se produire dans le plan PX comme dans le cas précédent. Ainsi, le filament va s'orienter de telle sorte que les arêtes 202 munies des encoches vont constituer les arêtes de travail du filament. Ces arêtes se trouvant dentées grâce à la présence desdites encoches, l'efficacité du travail de coupe est encore améliorée.

On notera que de telles encoches, ou plus généralement tout autre aménagement visant à réaliser une flexion privilégiée du filament dans le plan PX, peuvent être avantageusement réalisées sur un filament de polyamide réalisé par extrusion, à l'aide d'un outil de conformation opérant sur le filament encore chaud et déformable, ou encore à l'aide d'un outil à lames créant lesdites encoches ou autres par enlèvement de matière.

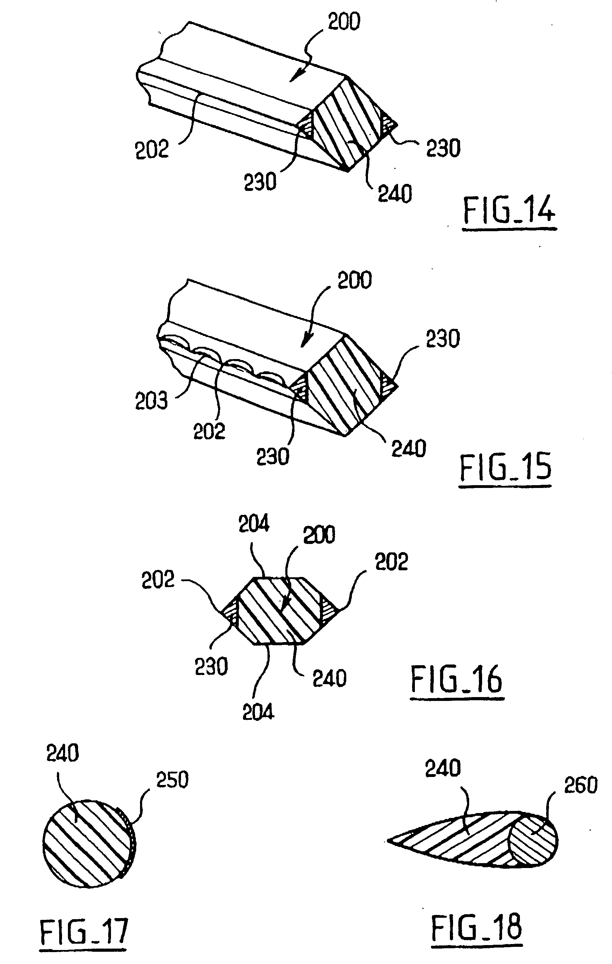

Les figures 14 à 18 montrent un certain nombre d'autres formes de réalisation possibles d'un filament de coupe possédant au moins une zone de travail bien déterminée, imposant de monter le filament dans la tête de coupe dans une orientation contrôlée.

Ainsi la figure 14 montre un filament 200 de section générale carrée, comme précédemment, apte à être orienté avec ses faces inclinées à environ 45° par rapport à l'horizontale et la verticale pour opérer au niveau de l'une parmi deux arêtes latérales 202 (selon le sens de rotation).

Dans cette réalisation, les zones 230 du filament situées au voisinage de ces arêtes sont constituées par un matériau différent du matériau constituant un corps principal 240 du filament. Dans le présent exemple, ces zones présentent une section triangulaire, avec une transition entre les deux matériaux au niveau de plans verticaux.

Par exemple, le matériau constituant le corps principal 240 est un polyamide, tandis que le matériau constituant les zones de travail 230 est une matière plastique, par exemple également un polyamide, ayant des propriétés différentes en termes notamment de souplesse et/ou de dureté et/ou de résistance à l'usure.

Il peut s'agir notamment d'un polyamide comportant, de façon connue en soi, un ou plusieurs adjuvants destinés à diminuer sa souplesse, ou encore un polyamide chargé de façon connue en soi en particules (particules métalliques, fibre de verre, fibre de carbone, etc.) destinées à améliorer la dureté, et donc l'efficacité de coupe et la résistance à l'usure. On peut bien entendu combiner la présence d'adjuvants et de produits de charge.

On notera qu'un tel filament peut être fabriqué notamment par une technique de co-extrusion connue en elle-même.

La figure 15 illustre une autre forme de réalisation d'un filament de coupe, dans lequel on a formé en outre dans au moins une zone de travail 230 des encoches 203 de manière à doter ces zones d'une denture améliorant l'efficacité de coupe. Si ces encoches sont suffisamment profondes, on réalise la flexion privilégiée telle que décrite plus haut pour assurer que le filament opère bien la coupe au niveau de l'une des zones de travail. Cette denture peut être obtenue par toute technique appropriée telle que notamment déformation pendant que les parties à travailler sont encore plastiquement déformables, ou enlèvement de matière mécanisé avec des lames ou analogues.

La figure 16 illustre quant à elle un filament de coupe analogue à celui de la figure 14 (ou de la figure 15 dans la version dentée), qui toutefois est tronqué en haut et en bas au niveau de deux plans horizontaux, pour être ainsi doté de deux faces planes généralement horizontales 204.

Une telle forme de réalisation permet en particulier d'améliorer la pénétration dans l'air du filament, et donc d'accroître la vitesse de coupe à puissance moteur égale, ou encore de diminuer la fatigue du moteur.

La figure 17 illustre un autre filament possédant à la périphérie d'un un corps principal 240 une zone de travail localisée 250 au niveau d'au moins l'un de ses côtés par lequel les végétaux sont attaqués. Dans cette forme de réalisation, le filament présente une section circulaire comme un filament conventionnel. Il possède toutefois au niveau d'au moins une région latérale un revêtement de travail, comprenant par exemple un métal ou un alliage métallique rapporté par dépôt. Il peut s'agir également d'une zone mince de matière polyamide chargée réalisée par co-extrusion.

Ici encore, la tête de coupe est adaptée pour pouvoir retenir le filament dans une orientation telle que la zone de travail 250 soit bien située dans la région d'attaque du filament.

La figure 18 illustre un autre exemple de filament de coupe, avec un profil en aile d'avion. Il possède un corps principal 240 et, au niveau de sa région d'attaque, une zone de travail 260 réalisée en un autre matériau, notamment plus résistant à l'usure, l'ensemble étant de préférence fabriqué par co-extrusion.

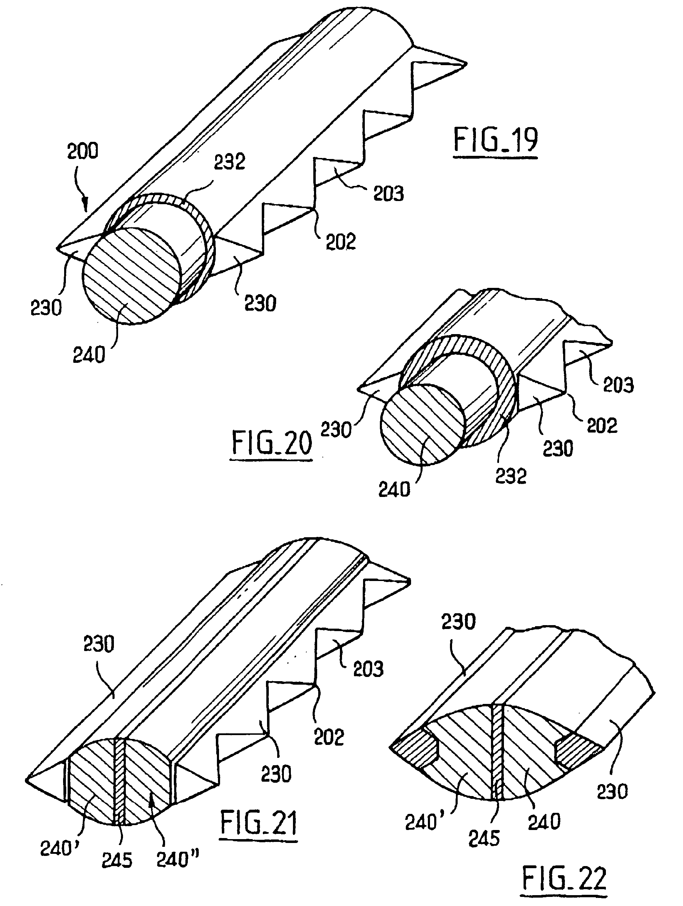

La figure 19 montre quant à elle un filament de coupe avec un corps principal, ou âme, cylindrique de révolution 240 en une première matière polyamide et une enveloppe 232 entourant complètement l'âme 240 et portant latéralement, d'un seul tenant avec elle, deux parties en saillie 230, 230. L'enveloppe 232 et les parties en saillie 230 sont réalisées en un matériau plus rigide et/ou plus résistant que le matériau de l'âme 240, comme décrit précédemment.

Ici encore on peut former une denture, d'un côté et/ou de l'autre, en formant des cavités au niveau de l'arête de coupe 202. Dans le présent exemple, la denture possède des dents triangulaires symétriques, d'autres formes de dents étant bien entendu possibles.

Cette forme de réalisation permet d'obtenir une solidarisation améliorée entre le corps principal du filament, formé pour l'essentiel par l'âme 240, et les parties latérales de travail 230.

La figure 20 illustre une structure analogue à celle de la figure 19, avec une âme 240 de diamètre plus petit et une enveloppe plus épaisse. On peut ainsi jouer sur la souplesse globale du filament et donc son comportement à la coupe.

La figure 21 illustre une autre structure de filament de coupe, avec une âme 240 constituée de deux parties 240', 240" séparées par une mince partie verticale 245 en un matériau de préférence plus dur, par exemple le même matériau que celui qui constitue les parties de travail 230 (qui sont ici semblables à celles des figures 19 et 20). On améliore ainsi la résistance à la flexion verticalement, et donc la stabilité horizontale du filament pendant la coupe. Dans cet exemple, pour une bonne pénétration dans l'air, l'âme 240', 240" présente des faces supérieure et inférieure arrondies.

La figure 22 illustre enfin une variante de la figure 21, dans laquelle les parties de travail latérales 230 sont réalisées par co-extrusion de façon encastrée dans des canaux 241 formés latéralement dans les parties d'âme 240', 240". De cette manière, on augmente la tenue mécanique entre les parties de travail 230 et l'âme 240', 240".

Bien entendu, la présente invention n'est nullement limitée aux formes de réalisation décrites et représentées, mais l'homme du métier saura y apporter de nombreuses variantes et modifications. En particulier, les différentes formes de réalisation peuvent être combinées entre elles.

On notera pour terminer que l'invention s'applique préférentiellement à des filaments présentant une section transversale relativement importante (typiquement supérieure à 3 mm²), c'est-à-dire une rigidité vis-à-vis de la torsion telle que, sur sensiblement toute la longueur d'un brin qui travaille, ce soit bien la zone de travail désirée qui attaque les végétaux.

## Revendications

1. Ensemble de coupe pour un appareil de coupe de végétaux tel qu'un coupe-bordure, une débroussailleuse, etc., **caractérisé en ce qu'**il comporte :
- une tête de coupe rotative (100) comprenant un corps cylindrique creux dans lequel sont pratiqués une série d'orifices (130) de forme carrée, lesdits orifices étant orientés en oblique par rapport à l'horizontale et à la verticale dans la position de coupe,
- une pluralité de filaments de coupe (200), chaque filament ayant une section carrée et présentant au moins une zone de travail localisée comprenant une arête dentée de coupe,
- des moyens de retenue des filaments dans les orifices (130) de la tête de coupe de manière à ce que lesdits filaments soient retenus dans une orientation telle que l'arête dentée de coupe constitue la zone d'attaque des végétaux et que les deux faces délimitant l'arête dentée de coupe soient fuyantes respectivement vers le haut et vers le bas par rapport à l'arête de coupe, et soient orientées en oblique par rapport à l'horizontale et la verticale dans la position de coupe.

2. Ensemble selon la revendication 1, **caractérisé en ce que** les côtés des orifices (130) et les faces délimitant l'arête dentée de coupe sont orientés suivant un angle compris entre 35 et 55° par rapport à l'horizontale et la verticale dans la position de coupe.

3. Ensemble selon l'une des revendications 1 ou 2, **caractérisé en ce que** la zone de travail (230) du filament comprend un matériau différent de celui d'un corps principal (240) du filament.

4. Ensemble de coupe selon la revendication 3, **caractérisé en ce que** le matériau de la zone de travail localisée (230) est massif, et **en ce que** le corps principal (240) et le matériau massif de la zone de travail sont réalisés par co-extrusion.

5. Ensemble de coupe selon la revendication 4, **caractérisé en ce qu'**il comprend deux zones de travail (230) disposées de part et d'autre du corps principal.

6. Ensemble de coupe selon l'une des revendications 4 ou 5, **caractérisé en ce que** le matériau de la ou des zones de travail (230) se prolonge au-delà de celle(s)-ci pour entourer entièrement le corps principal.

7. Ensemble de coupe selon l'une des revendications 4 à 6, **caractérisé en ce que** la ou chaque zone de travail (230) est encastrée dans le corps principal.

8. Ensemble de coupe selon l'une des revendications 4 à 7, **caractérisé en ce que** le corps principal est constitué par deux parties situées de part et d'autre d'une membrure en un matériau différent.

9. Ensemble de coupe selon la revendication 8, **caractérisé en ce que** la membrure s'étend généralement verticalement.

10. Ensemble de coupe selon la revendication 9, **caractérisé en ce que** la membrure est réalisée dans le même matériau que la ou les zones de travail (230).

11. Appareil de coupe de végétaux tel qu'un coupe-bordure, une débroussailleuse, etc., **caractérisé en ce qu'**il comprend un ensemble de coupe selon l'une des revendications 1 à 10, et un moteur pour entraîner en rotation ledit ensemble de coupe.

## Claims

1. A cutting assembly for a vegetation cutting apparatus, such as an edge-trimmer, a brush-cutter, etc., **characterised in that** it comprises:
- a rotating cutting head comprising a hollow cylindrical body containing a series of orifices (130) of square cross-section, said orifices being oriented obliquely relative to the horizontal and the vertical in the cutting position,
- a plurality of cutting filaments (200), each filament having a square cross-section and having at least one localised work zone comprising a toothed cutting edge,
- means for holding the filament in the orifices (130) of the cutting head so that said filaments are held in an orientation such that the toothed cutting edge constitutes the attack zone for the plants and that the two faces delimiting the toothed cutting edge taper respectively upwards and downwards relative to the cutting edge, and are oriented obliquely relative to the horizontal and the vertical in the cutting position.

2. The assembly as claimed in Claim 1, **characterised in that** the sides of the orifices (130) and the faces delimiting the toothed cutting edge are oriented at an angle of between 35 and 55° relative to the horizontal and the vertical in the cutting position.

3. The assembly as claimed in any one of Claims 1 or 2, **characterised in that** the work zone (230) of the filament comprises a material different to that of a principal body (240) of the filament.

4. The cutting assembly as claimed in Claim 3, **characterised in that** the material of the localised work zone (230) is-solid, and **in that** the principal body (240) and the solid material of the work zone are made via co-extrusion.

5. The cutting assembly as claimed in Claim 4, **characterised in that** it comprises two work zones (230) arranged on either side of the principal body.

6. The cutting assembly as claimed in any one of Claims 4 or 5, **characterised in that** the material of the work zone or zones (230) extends out over the latter to fully surround the principal body.

7. The cutting assembly as claimed in any one of Claims 4 to 6, **characterised in that** the or each work zone (230) is embedded in the principal body.

8. The cutting assembly as claimed in any one of Claims 4 to 7, **characterised in that** the principal body comprises two parts located on either side of a frame made of a different material.

9. The cutting assembly as claimed in Claim 8, **characterised in that** the frame extends generally vertically.

10. The cutting assembly as claimed in Claim 29, **characterised in that** the frame is made of the same material as the work zone or work zones (230).

11. A vegetation cutting apparatus, such as an edge-trimmer, a brush-cutter, etc., **characterised in that** it comprises a cutting assembly as claimed in any one of Claims 1 to 10, and a motor to drive in rotation said cutting assembly.

## Patentansprüche

1. Schneidvorrichtung für'ein Gerät zum Schneiden von Pflanzen wie z.B. ein Rasenkantenschneider, ein Gestrüppschneider usw., **dadurch gekennzeichnet, dass** sie Folgendes umfasst:
- einen drehenden Schneidkopf (100), umfassend einen hohlen zylindrischen Körper, in dem eine Reihe von Öffnungen (130) mit quadratischer Form angebracht ist, wobei die Öffnungen hinsichtlich der Horizontalen und der Vertikalen in der Schneidposition schräg ausgerichtet sind,
- eine Vielzahl von Schneidfäden (200), wobei jeder Faden einen quadratischen Querschnitt hat und mindestens einen lokalisierten Arbeitsbereich aufweist, umfassend eine gezahnte Schneidkante,
- Mittel zum Rückhalten der Fäden in den Öffnungen (130) des Schneidkopfs, so dass die Fäden in einer derartigen Ausrichtung zurückgehalten werden, dass die gezahnte Schneidkante den Angriffsbereich für die Pflanzen bildet, und dass sich die zwei Flächen, die die gezahnte Schneidkante begrenzen, nach oben bzw. nach unten hinsichtlich der Schneidkante verjüngen und hinsichtlich der Horizontalen und der Vertikalen in der Schneidposition schräg ausgerichtet sind.

2. Vorrichtung nach Anspruch 1, **dadurch gekennzeichnet, dass** die Seiten der Öffnungen (130) und die Seiten, die die gezahnte Schneidkante begrenzen, gemäß einem Winkel zwischen 35 und 55° hinsichtlich der Horizontalen und der Vertikalen in der Schneidposition ausgerichtet sind.

3. Vorrichtung nach einem der Ansprüche 1 oder 2, **dadurch gekennzeichnet, dass** der Arbeitsbereich (230) des Fadens ein anderes Material als dasjenige eines Hauptkörpers (240) des Fadens umfasst.

4. Schneidvorrichtung nach Anspruch 3, **dadurch gekennzeichnet, dass** das Material des lokalisierten Arbeitsbereichs (230) massiv ist, und **dadurch**, dass der Hauptkörper (240) und das massive Material des Arbeitsbereichs durch Koextrusion hergestellt sind.

5. Schneidvorrichtung nach Anspruch 4, **dadurch gekennzeichnet, dass** sie zwei Arbeitsbereiche (230) umfasst, die auf beiden Seiten des Hauptkörpers angebracht sind.

6. Schneidvorrichtung nach einem der Ansprüche 4 oder 5, **dadurch gekennzeichnet, dass** sich das Material des Arbeitsbereichs oder der Arbeitsbereiche (230) über diese(n) hinaus erstreckt, um den Hauptkörper vollständig zu umschließen.

7. Schneidvorrichtung nach einem der Ansprüche 4 bis 6, **dadurch gekennzeichnet, dass** der oder jeder Arbeitsbereich (230) im den Hauptkörper eingebaut ist.

8. Schneidvorrichtung nach einem der Ansprüche 4 bis 7, **dadurch gekennzeichnet, dass** der Hauptkörper aus zwei Teilen gebildet ist, die sich auf beiden Seiten eines Gurts aus einem anderen Material befinden.

9. Schneidvorrichtung nach Anspruch 8, **dadurch gekennzeichnet, dass** sich der Gurt im Allgemeinen vertikal erstreckt.

10. Schneidvorrichtung nach Anspruch 9, **dadurch gekennzeichnet, dass** der Gurt aus dem gleichen Material wie die Arbeitsbereiche (230) hergestellt ist.

11. Gerät zum Schneiden von Pflanzen wie z.B. ein Rasenkantenschneider, ein Gestrüppschneider usw., **dadurch gekennzeichnet, dass** es eine Schneidvorrichtung nach einem der Ansprüche 1 bis 10 umfasst, sowie einen Motor, um die Schneidvorrichtung zu drehen.
